# EUROPEAN PATENT APPLICATION

(11) **EP 4 790 822 A1**
(43) Date of publication of application: **12.08.2026**
(21) Application number: 24898054.2
(22) Date of filing: 25.11.2024
(51) Int. Cl.: H01M 50/531, H01M 50/502, H01M 50/503, H01M 50/516, H01M 50/178

(54) **SECONDARY BATTERY**

(30) Priority: 30.11.2023 KR 20230170392
(71) Applicant: LG Energy Solution, Ltd., Seoul 07335 (KR)
(72) Inventor: HWANG, Won Pill, Daejeon 34122 (KR); LEE, Jin Kyu, Daejeon 34122 (KR); KANG, Ye Ran, Daejeon 34122 (KR); PARK, Jun Kyu, Daejeon 34122 (KR); YOON, Doo Han, Daejeon 34122 (KR); KIM, Sun Jae, Daejeon 34122 (KR)
(74) Representative: Plasseraud IP
(86) International application number: PCT/KR2024/018756
(87) International publication number: WO 2025/116460

(57) **Abstract**

A secondary battery including a electrode assembly stack having a plurality of unit batteries stacked in a first direction and having electrode tabs of each of the plurality of unit batteries at both ends in a second direction perpendicular to the first direction; multifunctional terminal blocks (MTB) provided at both ends of the stack-type electrode assembly; and a laminate sheet surrounding the side surfaces of the stack-type electrode assembly is provided. The MTB includes a busbar structure electrically connected to the electrode tabs and an MTB housing accommodating the busbar structure, and the busbar structure includes a first busbar plate into which a plurality of electrode tabs are inserted together and a second busbar plate in surface contact with the first busbar plate.

## Description

### [Technical Field]

The present disclosure relates to a secondary battery, and more particularly to a secondary battery having a busbar structure to which a plurality of electrode tabs can be connected simply and with high reliability.

This application claims the benefit of priority from Korean Patent Application No. 10-2023-0170392 filed on November 30, 2023, and all of the contents of the Korean Patent Application No. 10-2023-0170392 are incorporated by reference into this disclosure.

### [Background]

Unlike primary batteries, secondary batteries can be charged and discharged many times. Secondary batteries are widely used as an energy source for various wireless devices such as handsets, laptops, and wireless vacuum cleaners. Recently, as the manufacturing cost per unit capacity of secondary batteries has decreased dramatically because of improved energy density and economies of scale, and as the cruising distance of battery electric vehicles (BEVs) has increased to an equivalent level to that of fuel vehicles, the major use of secondary batteries has shifted from mobile devices to mobility.

Meanwhile, recently, the demand for large-capacity battery packs applied to electric vehicles, etc. has been increasing. Battery packs mounted in vehicles are required to have large capacity as well as improved safety.

### [Summary]

### [Technical Problem]

The present disclosure is directed to providing a secondary battery having a busbar structure to which a plurality of electrode tabs can be connected simply and with high reliability.

### [Technical Solution]

To solve the technical problem, the present disclosure provides a secondary battery including: a stack-type electrode assembly having a plurality of unit batteries stacked in a first direction and having electrode tabs of each of the plurality of unit batteries at both ends in a second direction perpendicular to the first direction; multifunctional terminal blocks (MTBs) provided at both ends of the stack-type electrode assembly; and a laminate sheet surrounding the side surfaces of the stack-type electrode assembly, wherein the MTB includes a busbar structure electrically connected to the electrode tabs and an MTB housing accommodating the busbar structure, and the busbar structure includes a first busbar plate through which a plurality of electrode tabs are inserted together and a second busbar plate in surface contact with the first busbar plate.

In some aspects, the first busbar plate may include two or more slits, and a plurality of electrode tabs may be inserted through each slit.

In some aspects, the stack-type electrode assembly may include two or more electrode groups, and electrode tabs included in one electrode group may be inserted through one slit.

In some aspects, the second busbar plate may be in surface contact with the first busbar plate with the ends of the plurality of electrode tabs positioned therebetween.

In some aspects, the second busbar plate may include a first part in surface contact with the first busbar plate and a second part extending and bent from the first part.

In some aspects, the second part may be electrically connected to an electrode terminal part of the MTB.

In some aspects, the second part may extend bent 180 degrees from the first part.

In some aspects, the first busbar plate and the second busbar plate may be area welded.

In some aspects, the first busbar plate and the second busbar plate may be bonded by electromagnetic pulse technique (EMPT).

Another aspect of the present disclosure provides a secondary battery including: a stack-type electrode assembly having a plurality of unit batteries stacked in a first direction and having electrode tabs of each of the plurality of unit batteries at both ends in a second direction perpendicular to the first direction; multifunctional terminal blocks (MTBs) provided at both ends of the stack-type electrode assembly; and a laminate sheet surrounding the side surfaces of the stack-type electrode assembly, wherein the MTB includes a busbar structure electrically connecting the electrode tabs and an MTB housing accommodating the busbar structure, and the busbar structure includes a first busbar plate and a second busbar plate in surface contact with each other, and the second busbar plate includes a first part in surface contact with the first busbar plate and a second part extending and bent from the first part.

In some aspects, the first part may include a plurality of slits through which electrode tabs can be inserted, and a plurality of electrode tabs may be inserted through each of the plurality of slits.

In some aspects, the plurality of electrode tabs may extend between the first busbar plate and the second busbar plate.

In some aspects, the plurality of electrode tabs may be integrated with at least one of the first busbar plate and the second busbar plate between the first busbar plate and the second busbar plate such that the interface between the plurality of electrode tabs and the at least one of the first busbar plate and the second busbar plate is unidentifiable.

In some aspects, the second part may extend bent 180 degrees from the first part.

In some aspects, the first busbar plate and the first part of the second busbar plate may be bonded by electromagnetic pulse technique (EMPT).

### [Advantageous Effects]

The secondary battery of the present disclosure has the effect of connecting a plurality of electrode tabs to a busbar structure in a simple and highly reliable manner.

However, the technical effects that can be obtained in exemplary aspects of the present disclosure are not limited to the above-described effects, and other effects not mentioned can be clearly understood by a person skilled in the art from the description of the disclosure described below. In other words, unintended effects of implementing the exemplary aspects of the present disclosure may also be derived from the exemplary aspects of the present disclosure by a person skilled in the art.

### [Brief Description of the Drawings]

FIG. 1 is a perspective view illustrating an important part of a secondary battery according to one aspect of the present disclosure.
FIG. 2 is a partial perspective view illustrating an enlarged portion of the secondary battery of FIG. 1.
FIG. 3 is a schematic perspective view illustrating the removal of a laminate sheet from the secondary battery of FIG. 1.
FIG. 4 is an exploded perspective view illustrating an end of a secondary battery according to one aspect of the present disclosure.
FIG. 5 is a schematic cross-sectional view illustrating an end of the secondary battery shown in FIG. 4 cut through an electrode terminal part.
FIG. 6 is a conceptual diagram illustrating a method of coupling a plurality of electrode tabs to a first busbar plate and a second busbar plate.
FIGS. 7 to 9 are conceptual diagrams illustrating aspects of integrating a plurality of electrode tabs when the first busbar plate and the second busbar plate are bonded.
FIG. 10 is a schematic side view illustrating an important part of an end of a secondary battery according to one aspect of the present disclosure.
FIG. 11 is a partial exploded perspective view illustrating a coupling method of laminate sheets of a secondary battery according to one aspect of the present disclosure.
FIG. 12 is a partial cross-sectional view of a laminate sheet according to one aspect of the present disclosure.
FIG. 13 is a schematic perspective view of a battery pack according to one aspect of the present disclosure.
FIG. 14 is an exploded perspective view schematically illustrating the configuration of the battery pack of FIG. 13.
FIG. 15 is a perspective view illustrating the battery cells of FIG. 14 seated in a pack housing.
FIG. 16 is an exploded perspective view illustrating an end of a secondary battery according to another aspect of the present disclosure.
FIG. 17 is a schematic cross-sectional view illustrating the end of the secondary battery shown in FIG. 16 cut through the electrode terminal part.

### [Detailed Description]

Hereinafter, preferred aspects of the present disclosure concept will be described in detail with reference to the accompanying drawings. However, aspects of the present disclosure concept may be modified in various different forms, and it should not be interpreted that the scope of the present disclosure concept is limited by the aspects described below. It is preferred that the aspects of the present disclosure be interpreted as provided to explain the present disclosure more fully to a person skilled in the art. Herein, the same reference numerals refer to the same elements. In addition, the various elements and areas of the drawings are schematically illustrated. Accordingly, the present disclosure is not limited by the relative sizes or spacing illustrated in the accompanying drawings.

Terms such as first, second, and the like may be used to describe various components, but the components are not limited by the terms. The terms are used only for the purpose of distinguishing one component from the other component. For example, a first component may be named a second component, and vice versa, a second component may be named a first component, without departing from the scope of the present disclosure concept.

The terms used in the present description are used merely to explain specific aspects and are not intended to limit the present disclosure concept. Expressions in the singular include the plural unless the context clearly indicates otherwise. The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

Unless otherwise defined, all terms used herein, including technical terms and scientific terms, shall have the same meaning as commonly understood by a person skilled in the art of the technical field to which the present disclosure concept belongs. In addition, it will be understood that terms such as commonly used, dictionary-defined terms are to be construed to have a meaning consistent with the meaning they have in the context of the technology to which they relate and are not to be construed in an excessively formal sense unless explicitly defined herein.

Specific process sequences may be performed differently from the order described when some aspects are otherwise implementable. For example, two processes described in succession may be performed substantially simultaneously or may be performed in an order opposite to the order described.

In the accompanying drawings, for example, variations of the depicted forms may be expected, depending on manufacturing technology and/or tolerances. Accordingly, aspects of the present disclosure should not be construed as limited to the specific forms of the areas shown herein, and should include, for example, variations in form resulting from manufacturing processes. All terms "and/or" used herein are included each and every combination of one or more of the components mentioned. In addition, the term "substrate" as used herein may refer to the substrate itself, or to a stacked structure including the substrate and any predetermined layers or films, etc. formed on the surface thereof. In addition, the term "surface of the substrate" as used herein may refer to the exposed surface of the substrate itself, or to the outer surface of a predetermined layer or film, etc. formed on the substrate.

### (first aspect)

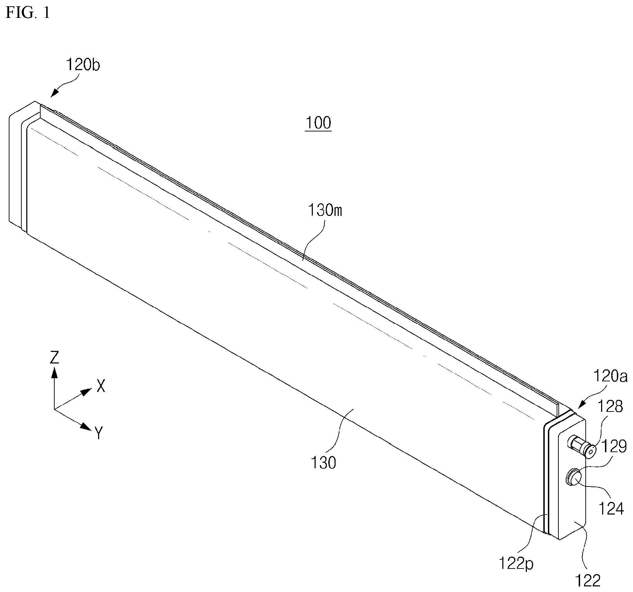

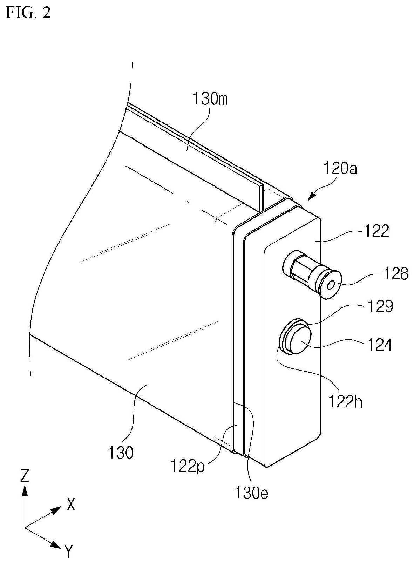

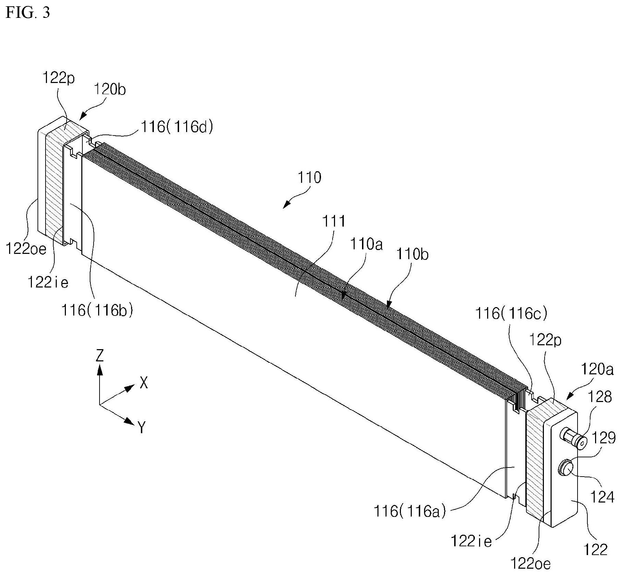

FIG. 1 is a perspective view illustrating an important part of a secondary battery 100 according to one aspect of the present disclosure. FIG. 2 is a partial perspective view illustrating an enlarged portion of the secondary battery 100 of FIG. 1. FIG. 3 is a schematic perspective view illustrating the removal of a laminate sheet 130 from the secondary battery 100 of FIG. 1.

In the following drawings, the secondary battery 100 is illustrated as being defined in a vertical coordinate system defined by the first direction along the X-axis, the second direction along the Y-axis, and the third direction along the Z-axis, which are perpendicular to each other. However, the first direction, second direction, and third direction only need to be relatively perpendicular to each other and are not specifically limited.

Referring to FIGS. 1 to 3, the secondary battery 100 includes a stack-type electrode assembly 110, multifunctional terminal blocks (MTB) 120a, 120b, and a laminate sheet 130.

The stack-type electrode assembly 110 may include a plurality of unit batteries 111 stacked in a first direction (for example, X-axis direction). Each of the unit batteries 111 may have electrode material coated on a metal foil that acts as a current collector.

Each unit battery 111 may have a thin plate-shaped body extending in a second direction (for example, Y-axis direction). Each unit battery 111 may be either a positive electrode unit battery or a negative electrode unit battery. In some aspects, the plurality of unit batteries 111 may be alternately stacked with one positive electrode unit battery and one negative electrode unit battery. The positive electrode unit battery and the negative electrode unit battery may be separated from each other by a separator.

In some other aspects, the plurality of unit batteries 111 may be alternately stacked with a plurality of positive electrode unit batteries and a plurality of negative electrode unit batteries. The plurality of positive electrode unit batteries and the plurality of negative electrode unit batteries may be separated from each other by a separator.

The stack-type electrode assembly 110 may have electrode tabs 116 at both ends in the second direction (for example, Y-axis direction). The electrode tabs 116 may be extensions of the uncoated parts of the current collectors of the plurality of unit batteries 111.

The stack-type electrode assembly 110 may include a first electrode group 110a and a second electrode group 110b stacked in the first direction (for example, X-axis direction). The unit batteries 111 of the first electrode group 110a are stacked in the first direction (for example, X-axis direction), and the electrode tabs 116 of the unit batteries 111 may be combined with each other on both sides. Also, the unit batteries 111 of the second electrode group 110b are stacked in the first direction (for example, X-axis direction), and the electrode tabs 116 of the unit batteries 111 may be combined with each other on both sides.

In some aspects, the first electrode group 110a may have first electrode tabs 116a combined with a certain polarity on one side and second electrode tabs 116b combined with a different polarity on the other side. Also, the second electrode group 110b may have third electrode tabs 116c combined with a certain polarity on one side and fourth electrode tabs 116d combined with a different polarity on the other side.

A first MTB 120a may be provided at one end of the stack-type electrode assembly 110 in the second direction (for example, Y-axis direction) and a second MTB 120b may be provided at the other end. One of the first MTB 120a and the second MTB 120b may be electrically connected to the positive electrode side of the stack-type electrode assembly 110, and the other may be electrically connected to the negative electrode side of the stack-type electrode assembly 110. The second MTB 120b may have substantially the same configuration as the first MTB 120a, differing only in polarity. The first MTB 120a will be described below, but a person skilled in the art will be able to understand the configuration of the second MTB 120b from this description.

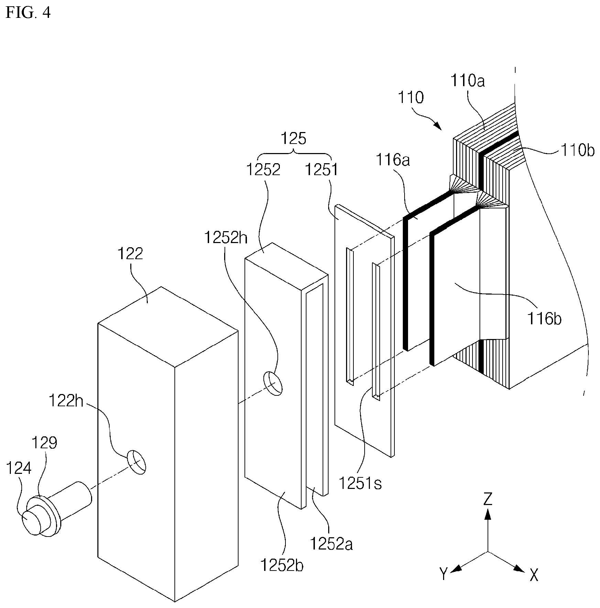

In some aspects, the first MTB 120a may include an MTB housing 122, an electrode terminal part 124 accommodated in the MTB housing 122, and a busbar structure 125 (refer to FIG. 4) that electrically connects the electrode terminal part 124 and the combined electrode tabs 116.

The MTB housing 122 may include a material with relatively high rigidity, such as metal, and defines the external appearance of the first MTB 120a. In some aspects, the MTB housing 122 may be made of aluminum (Al), nickel (Ni), iron (Fe), cobalt (Co), chromium (Cr), manganese (Mn), or an alloy containing one or more of these.

The MTB housing 122 may include a through-hole 122h that exposes the electrode terminal part 124, which will be described later. The through-hole 122h may be provided in the MTB housing 122 so that the electrode terminal part 124 is exposed toward the second direction (for example, Y-axis direction). Therefore, the through-hole 122h may be provided on a plane perpendicular to the second direction (for example, Y-axis direction) of the MTB housing 122. Also, the through-hole 122h may have an opening that is open in the longitudinal direction of the electrode assembly 110. The shape of the through-hole 122h may be configured to conform to the outer shape of the portion of the electrode terminal part 124 that is exposed to the outside.

In some aspects, the exposed surface of the electrode terminal part 124 that is exposed to the outside from the MTB housing 122 may be a plane. In some aspects, the exposed surface may have a plane extending perpendicular to the second direction (for example, Y-axis direction). In some aspects, the electrode terminal part 124 may be exposed to the outside with a disk-shaped free surface.

In some aspects, an electrically insulating gasket 129 may be provided between the electrode terminal part 124 and the MTB housing 122 such that the electrode terminal part 124 is electrically insulated from the MTB housing 122.

In some aspects, the first MTB 120a may include a rupture disk configured to discharge gas that causes excessive increase in internal pressure by rupturing when the internal pressure of the secondary battery 100 increases excessively. The rupture disk does not restore to its original state once it ruptures due to a thermal event occurring inside the secondary battery 100. The rupture disk may be any rupture disk known in the art and is not specifically limited.

In some aspects, the MTB housing 122 may further include a fused resin layer 122p on a side surface.

The fused resin layer 122p is a layer of thermoplastic resin, for example, which may contain one or more of polyolefin resin, polyester resin, polyamide resin, polyvinyl chloride, polyvinylidene chloride, polystyrene, polyacrylonitrile, polyurethane, polycarbonate, polyacetal, polyacrylate, and modified polyvinyl alcohol resin.

The polyolefin resin may include, for example, polyethylene, polypropylene, poly(1-butene), poly(4-methyl-1-pentene), ethylene-propylene copolymer, copolymer of ethylene and α-olefin having 4 or more carbon atoms, copolymer of polyolefin and maleic anhydride, ethylene-vinyl ester copolymer, ethylene-acrylic acid ester copolymer, or modified polyolefin modified by grafting these with unsaturated carboxylic acid or its derivatives, but the present disclosure is not limited thereto.

The polyester resin may include polyethylene terephthalate, polybutylene terephthalate, or polyethylene naphthalate, but the present disclosure is not limited thereto.

The polyamide resin may include nylon 6, nylon 6·6, nylon 6/66 copolymer, nylon 11, nylon 12, or poly(m-xylene adipamide), but the present disclosure is not limited thereto.

The fused resin layer 122p may be casted, or may be stretched or rolled in uniaxial or biaxial directions.

In some aspects, the fused resin layer 122p may at least partially coat a side surface of the MTB housing 122. In some aspects, the fused resin layer 122p may extend from the inner end 122ie of the side of the MTB housing 122 toward the outer end 122oe of the side of the MTB housing 122. Here, the inner end 122ie refers to the end adjacent to the electrode tabs 116. In some aspects, the fused resin layer 122p may surround the side surface of the MTB housing 122 with a predetermined width between the inner end 122ie and the outer end 122oe. In some aspects, the fused resin layer 122p may extend along the side surface of the MTB housing 122 with a predetermined width between the inner end 122ie and the outer end 122oe.

In some aspects, the fused resin layer 122p may surround the side surface of the MTB housing 122 with a constant width between the inner end 122ie and the outer end 122oe. In some aspects, the fused resin layer 122p may extend in the first direction (for example, X-axis direction) and/or the third direction (for example, Z-axis direction) with a constant width between the inner end 122ie and the outer end 122oe.

In some aspects, the fused resin layer 122p may extend along the side surface of the MTB housing 122 with a constant width between the inner end 122ie and the outer end 122oe.

In some aspects, the fused resin layer 122p may coat the entire side surface of the MTB housing 122.

The fused resin layer 122p may have a thickness of, for example, approximately 20 µm to approximately 400 µm. In some aspects, the fused resin layer 122p may have a thickness of approximately 20 µm to approximately 400 µm, approximately 30 µm to approximately 380 µm, approximately 40 µm to approximately 360 µm, approximately 50 µm to approximately 340 µm, approximately 60 µm to approximately 320 µm, approximately 70 µm to approximately 300 µm, approximately 80 µm to approximately 280 µm, approximately 90 µm to approximately 260 µm, approximately 100 µm to approximately 240 µm, approximately 110 µm to approximately 220 µm, approximately 120 µm to approximately 200 µm, approximately 130 µm to approximately 180 µm, approximately 140 µm to approximately 160 µm, or a range between any two of these values.

If the thickness of the fused resin layer 122p is too thin, mechanical strength may be insufficient. If the thickness of the fused resin layer 122p is too thick, it may be economically disadvantageous.

The fused resin layer 122p may be fused with the laminate sheet 130. In some aspects, the fused resin layer 122p may extend from the end 130e of the laminate sheet 130. In some aspects, the fused resin layer 122p may be exposed from the edge part 130e of the laminate sheet 130 and extend toward the outer end 122oe.

In some aspects, the first MTB 120a may further include a check valve 128. The check valve 128 may be configured to open to discharge internal gas when the internal pressure of the secondary battery 100 becomes higher than a predetermined pressure, and to close again when the internal pressure is relieved as the gas is discharged. The check valve 128 has no part that ruptures due to the discharge of the gas and can be restored to its original state after discharging the internal gas.

The secondary battery 100 further includes an electrolyte. The electrolyte may be an electrolyte commonly used for lithium secondary batteries and is not specifically limited. In some aspects, the electrolyte may be injected just before sealing the laminate sheet 130. In some aspects, the electrolyte may be injected through an electrolyte injection port provided in the first MTB 120a after sealing the laminate sheet 130.

FIG. 4 is an exploded perspective view illustrating an end of a secondary battery 100 according to one aspect of the present disclosure.

Referring to FIG. 4, the first MTB 120a includes an MTB housing 122, a busbar structure 125 accommodated inside the MTB housing 122, and an electrode terminal part 124 electrically connected to the busbar structure 125.

The busbar structure 125 may be electrically connected to the electrode tabs 116a, 116c of the stack-type electrode assembly 110. The busbar structure 125 may electrically connect the electrode tabs 116a, 116c and the electrode terminal part 124.

The busbar structure 125 may include a first busbar plate 1251 and a second busbar plate 1252. The first busbar plate 1251 and the second busbar plate 1252 are electrically connected to each other. In some aspects, the first busbar plate 1251 and the second busbar plate 1252 may be area welded to each other.

In some aspects, the first busbar plate 1251 and the second busbar plate 1252 may each independently be made of copper (Cu), nickel (Ni), aluminum (Al), iron (Fe), cobalt (Co), platinum (Pt), molybdenum (Mo), tin (Sn), palladium (Pd), or an alloy containing one or more of these.

In some aspects, the first busbar plate 1251 may be a generally flat plate. The first busbar plate 1251 may include slits 1251s through which the electrode tabs 116a, 116c can pass. The first electrode tabs 116a may have one slit 1251s corresponding to them. Also, the third electrode tabs 116c may have one slit 1251s corresponding to them. A person skilled in the art will understand that the second electrode tabs 116b and the fourth electrode tabs 116d may also have corresponding slits in a first busbar plate accommodated in the second MTB 120b.

Specifically, the first electrode tabs 116a are a plurality of electrode tabs provided on one side of a plurality of unit batteries belonging to the first electrode group 110a, and they are inserted into one slit 1251s. Also, the third electrode tabs 116c are a plurality of electrode tabs provided on one side of a plurality of unit batteries belonging to the second electrode group 110b, and they are inserted into another slit 1251s. That is, electrode tabs 116a, 116c included in one electrode group 110a, 110b may be inserted into one slit 1251s.

The second busbar plate 1252 may include a first part 1252a configured to be in area contact with the first busbar plate 1251. Also, the second busbar plate 1252 may include a second part 1252b that is electrically connected to the first part 1252a and extending bent from the first part 1252a. In some aspects, the second part 1252b may be bent and extend 180 degrees from the first part 1252a. The second part 1252b may be electrically connected to the electrode terminal part 124.

In some aspects, the first part 1252a of the second busbar plate 1252 may extend substantially parallel to the second part 1252b. The first part 1252a and the second part 1252b may be two parts located on opposite sides of a single bent flat plate.

The busbar structure 125 may be accommodated inside the MTB housing 122. The busbar structure 125 may be electrically connected to the electrode terminal part 124 extending through the through-hole 122h of the MTB housing 122. In some aspects, the busbar structure 125 may be configured to directly contact the electrode terminal part 124. In some aspects, the electrode terminal part 124 may be configured to directly contact the second busbar plate 1252 of the busbar structure 125. In some aspects, the electrode terminal part 124 may be configured to directly contact the second part 1252b of the second busbar plate 1252.

While the first MTB 120a has been described above, a person skilled in the art will understand that the second MTB 120b located on the opposite side of the first MTB 120a may be configured in the same way from the description above.

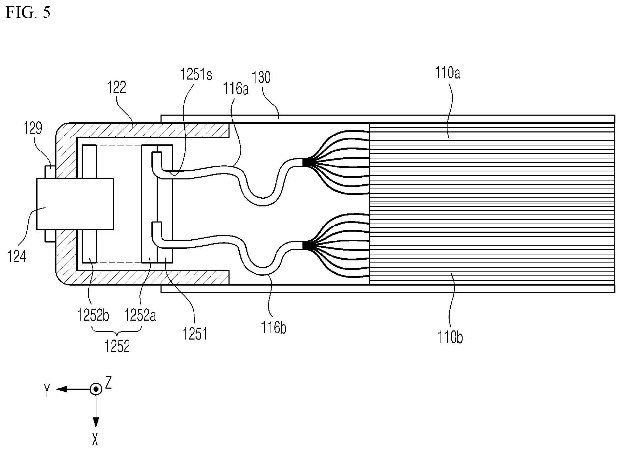

FIG. 5 is a schematic cross-sectional view illustrating the end of the secondary battery 100 shown in FIG. 4 cut through the electrode terminal part 124.

Referring to FIG. 5, a plurality of electrode tabs 116a, 116c may extend between the first busbar plate 1251 and the second busbar plate 1252. In some aspects, the plurality of electrode tabs 116a, 116c may extend along the interface between the first busbar plate 1251 and the second busbar plate 1252 after passing through the slit 1251s of the first busbar plate 1251. In some aspects, the plurality of electrode tabs 116a, 116c may extend in the first direction (for example, X-axis direction) between the first busbar plate 1251 and the second busbar plate 1252.

As shown in FIG. 5, the ends of the plurality of electrode tabs 116a, 116c have two sides extending in parallel. In some aspects, one side of the ends of the plurality of electrode tabs 116a, 116c may contact the first busbar plate 1251 and extend in the first direction (for example, X-axis direction). In some aspects, the other side of the ends of the plurality of electrode tabs 116a, 116c may contact the second busbar plate 1252 and extend in the first direction (for example, X-axis direction).

In some aspects, the plurality of electrode tabs 116a, 116c may include a shock absorbing part that is bent in a predetermined direction in the portion not inserted into the slit 1251s.

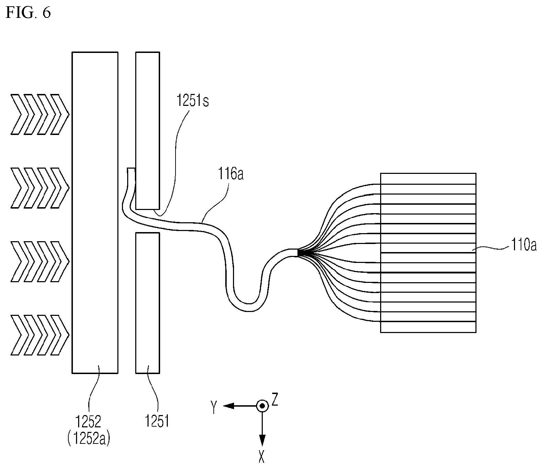

FIG. 6 is a conceptual diagram illustrating a method of coupling the plurality of electrode tabs 116a with the first busbar plate 1251 and the second busbar plate 1252.

Referring to FIG. 6, the plurality of electrode tabs 116a may pass through the slit 1251s formed in the first busbar plate 1251. Then, the ends of the plurality of electrode tabs 116a may be bent in one direction. At this time, the ends of the plurality of electrode tabs 116a may not be in close contact with the first busbar plate 1251.

Then, the second busbar plate 1252 may be placed in contact with the first busbar plate 1251 and area welded. In other words, the first busbar plate 1251 and the second busbar plate 1252 may be area welded with the ends of the plurality of electrode tabs 116a interposed between the first busbar plate 1251 and the second busbar plate 1252. In some aspects, the welding of the first busbar plate 1251 and the second busbar plate 1252 may be cold welding.

Methods for area welding include, for example, explosion welding, compression welding, electromagnetic pulse technique (EMPT), etc. In some aspects, the second busbar plate 1252 may be bonded to the first busbar plate 1251 by EMPT. When using EMPT to bond the first busbar plate 1251 and the second busbar plate 1252, a strong electrical repulsive force (refer to arrow direction) may be applied to the second busbar plate 1252 while fixing the first busbar plate 1251.

Area welding can have stronger bonding strength compared to bonding methods that are bonded only along specific lines or at specific points because the second busbar plate 1252 is bonded to the first busbar plate 1251 over a predetermined area. In particular, the EMPT method can bond the first busbar plate 1251 and the second busbar plate 1252 with high reliability and at a fast speed.

By bonding the first busbar plate 1251 and the second busbar plate 1252, the ends of the plurality of electrode tabs 116a come into close contact with the first busbar plate 1251 and/or the second busbar plate 1252. In some aspects, the ends of the plurality of electrode tabs 116a may be integrated with the first busbar plate 1251. In some aspects, the ends of the plurality of electrode tabs 116a may be integrated with the second busbar plate 1252.

Conventionally, to electrically connect a plurality of electrode tabs to a busbar, the plurality of electrode tabs had to be welded to each other first and then welded to an electrode lead. However, in the aspects of the present disclosure, not only is the electrode lead omitted, but the manufacturing process can be significantly simplified because the plurality of electrode tabs belonging to each electrode group are inserted into the busbar structure and then all electrode tabs are welded at once. In addition, since the electrode tabs are area-welded at cold temperature, they can be bonded to the busbar structure with high reliability and bonding strength, and defects due to welding burn can be prevented.

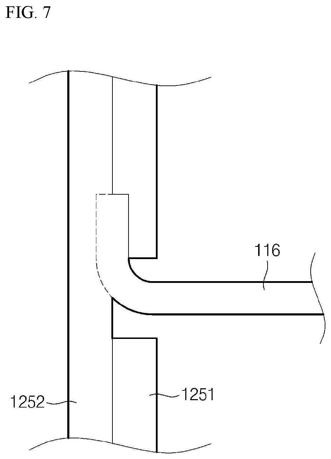

FIGS. 7 to 9 are conceptual diagrams illustrating aspects of integrating a plurality of electrode tabs 116 when the first busbar plate 1251 and the second busbar plate 1252 are bonded.

Referring to FIG. 7, the first busbar plate 1251 and the second busbar plate 1252 may be in close contact with each other by being bonded. The plurality of electrode tabs 116 may extend between the first busbar plate 1251 and the second busbar plate 1252 after passing through the slit of the first busbar plate 1251. By bonding the first busbar plate 1251 and the second busbar plate 1252, the plurality of electrode tabs 116 may be integrated with the second busbar plate 1252. In some aspects, the plurality of electrode tabs 116 may be integrated with the second busbar plate 1252 such that the interface is unidentifiable. The dotted line between the plurality of electrode tabs 116 and the second busbar plate 1252 in FIG. 7 conceptually represents the interface before complete bonding.

In some aspects, an interface may be identified between the plurality of electrode tabs 116 and the first busbar plate 1251. However, even if the interface is identified, the plurality of electrode tabs 116 and the first busbar plate 1251 are in extremely close contact, so sufficient bonding strength and electrical conductivity can be maintained.

Although FIG. 7 shows that an interface exists between the first busbar plate 1251 and the second busbar plate 1252, a person skilled in the art will understand that the interface between the first busbar plate 1251 and the second busbar plate 1252 may be unidentifiable depending on the method and conditions of area welding.

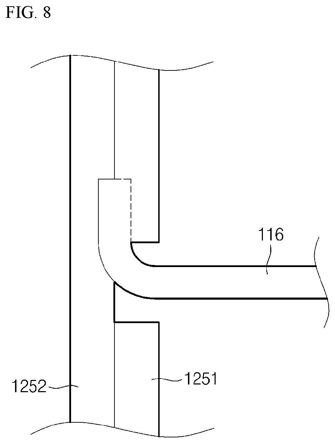

Referring to FIG. 8, by bonding the first busbar plate 1251 and the second busbar plate 1252, the plurality of electrode tabs 116 may be integrated with the first busbar plate 1251. In some aspects, the plurality of electrode tabs 116 may be integrated with the first busbar plate 1251 such that the interface is unidentifiable. The dotted line between the plurality of electrode tabs 116 and the first busbar plate 1251 in FIG. 8 conceptually represents the interface before complete bonding.

In some aspects, an interface may be identified between the plurality of electrode tabs 116 and the second busbar plate 1252. However, even if the interface is identified, the plurality of electrode tabs 116 and the second busbar plate 1252 are in extremely close contact, so sufficient bonding strength and electrical conductivity can be maintained.

Although FIG. 8 shows that an interface exists between the first busbar plate 1251 and the second busbar plate 1252, a person skilled in the art will understand that the interface between the first busbar plate 1251 and the second busbar plate 1252 may be unidentifiable depending on the method and conditions of area welding.

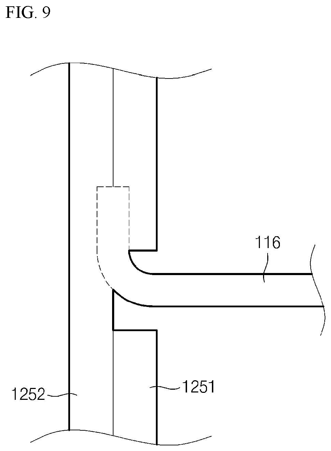

Referring to FIG. 9, by bonding the first busbar plate 1251 and the second busbar plate 1252, the plurality of electrode tabs 116 may be integrated with the first busbar plate 1251 and the second busbar plate 1252. In some aspects, the plurality of electrode tabs 116 may be integrated with the first busbar plate 1251 and the second busbar plate 1252 such that the interface is unidentifiable.

Although FIG. 9 shows that an interface exists between the first busbar plate 1251 and the second busbar plate 1252, a person skilled in the art will understand that the interface between the first busbar plate 1251 and the second busbar plate 1252 may be unidentifiable depending on the method and conditions of area welding.

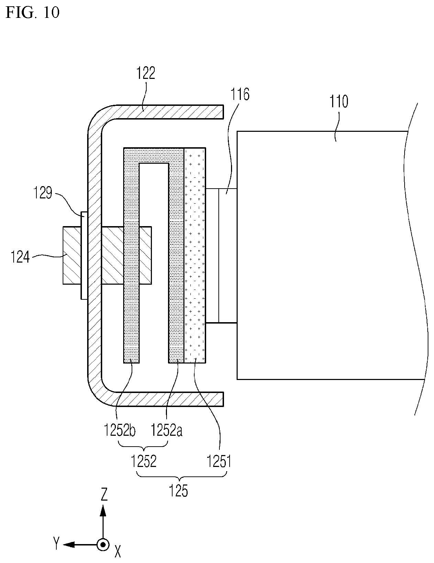

FIG. 10 is a schematic side view illustrating an important part of an end of a secondary battery 100 according to one aspect of the present disclosure.

Referring to FIG. 10, a busbar structure 125 is accommodated inside the MTB housing 122, and the busbar structure 125 may be electrically connected to the electrode terminal part 124. The overlapped plurality of electrode tabs 116 may extend in the first direction (for example, X-axis direction) between the first busbar plate 1251 and the second busbar plate 1252 after passing through the slit of the first busbar plate 1251.

The first part 1252a of the second busbar plate 1252 may be in surface contact with the first busbar plate 1251. The second part 1252b of the second busbar plate 1252 may extend from the first part 1252a of the second busbar plate 1252 and be bent 180 degrees. The second part 1252b may be electrically connected to the electrode terminal part 124. In some aspects, the second part 1252b may directly contact the electrode terminal part 124. In some aspects, the second part 1252b may be electrically connected to the electrode terminal part 124 through another conductor.

In some aspects, the first busbar plate 1251 and the second busbar plate 1252 may be electrically insulated from the MTB housing 122.

FIG. 10 shows an example where the second busbar plate 1252 is bent 180 degrees with respect to the X-axis, but a person skilled in the art will understand that the second busbar plate 1252 may also be bent 180 degrees with respect to the Z-axis.

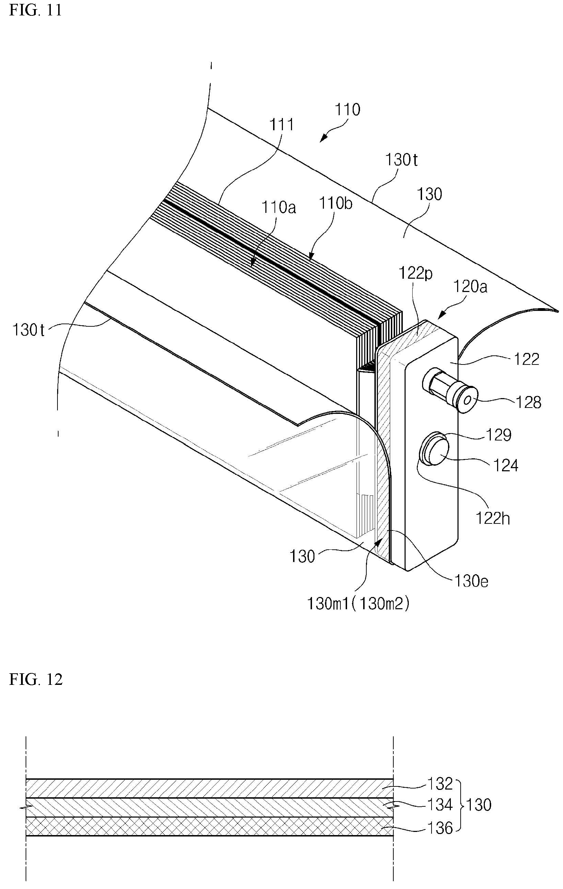

FIG. 11 is a partial exploded perspective view illustrating a coupling method of laminate sheets 130 of a secondary battery 100 according to one aspect of the present disclosure. FIG. 12 is a partial cross-sectional view of a laminate sheet 130 according to one aspect of the present disclosure.

Referring to FIGS. 11 and 12, the laminate sheet 130 may be configured to wrap around the side surface of the stack-type electrode assembly 110. In some aspects, the laminate sheet 130 may be attached to the side surface of the MTBs 120a, 120b to at least partially coat the side surface of the MTBs 120a, 120b. In some aspects, a parallel pair of edge parts 130e of the laminate sheet 130 may coat the entire side surfaces of the MTBs 120a, 120b that are parallel to the second direction (for example, Y-axis direction). In some other aspects, a parallel pair of edge parts 130e of the laminate sheet 130 may coat only a portion of the side surfaces of the MTBs 120a, 120b that are parallel to the second direction (for example, Y-axis direction).

The laminate sheet 130 may include a flexible metal layer 134, an inner resin layer 132 provided on one side of the metal layer 134, and an outer resin layer 136 provided on the other side of the metal layer 134.

The metal layer 134 can maintain an appropriate thickness, prevent the penetration of water vapor, oxygen, and other gases from the outside to the inside, and prevent leakage of the electrolyte. In some aspects, the metal layer 134 may include one or more selected from iron (Fe), carbon (C), chromium (Cr), manganese (Mn), nickel (Ni), aluminum (Al), and alloys thereof, but is not limited thereto. If the metal layer 134 is made of a material containing iron, the mechanical strength becomes stronger, and if it is made of aluminum, the flexibility improves, so aluminum metal foil is mainly used.

The metal layer 134 may be configured to be relatively easily deformed by external forces and to have an appropriate thickness and mechanical strength such that cracks or holes do not occur even with repeated deformation.

In some aspects, the metal layer 134 may have a thickness of approximately 20 micrometers (*µ*m) to approximately 100 *µ*m. In some aspects, the thickness of the metal layer 134 may be approximately 20 *µ*m to approximately 100 *µ*m, approximately 25 *µ*m to approximately 95 *µ*m, approximately 30 *µ*m to approximately 90 *µ*m, approximately 35 *µ*m to approximately 85 *µ*m, approximately 40 *µ*m to approximately 80 *µ*m, approximately 45 *µ*m to approximately 75 *µ*m, approximately 50 *µ*m to approximately 70 *µ*m, approximately 55 *µ*m to approximately 60 *µ*m, or a range between any two of these values.

The inner resin layer 132 provided on one side of the metal layer 134 may include a heat-adhesive layer. In some aspects, the inner resin layer 132 may include a polyolefin-based material that can perform sealing action through fusion. In some aspects, the inner resin layer 132 may include modified propylene such as casted polypropylene (CPP), or polypropylene-butylene-ethylene terpolymer.

The inner resin layer 132 may be formed by coating or laminating on one side of the metal layer 134.

The outer resin layer 136 provided on the other side of the metal layer 134 may act as a base substrate and protective layer for forming the laminate sheet 130. The outer resin layer 136 may include insulating materials such as polyethylene terephthalate (PET) or Nylon.

In some aspects, the inner resin layer 132 and the outer resin layer 136 may each have a thickness of approximately 10 micrometers (*µ*m) to approximately 50 *µ*m. In some aspects, the thickness of each of the inner resin layer 132 and the outer resin layer 136 may be approximately 10 *µ*m to approximately 50 *µ*m, approximately 12 *µ*m to approximately 48 *µ*m, approximately 15 *µ*m to approximately 45 *µ*m, approximately 17 *µ*m to approximately 43 *µ*m, approximately 20 *µ*m to approximately 40 *µ*m, approximately 22 *µ*m to approximately 38 *µ*m, approximately 25 *µ*m to approximately 35 *µ*m, approximately 27 *µ*m to approximately 33 *µ*m, or a range between any two of these values.

In some aspects, an adhesive resin layer may be further provided between the inner resin layer 132 and the metal layer 134 and/or between the outer resin layer 136 and the metal layer 134. The adhesive resin layer may be provided for smooth adhesion between heterogeneous materials. The adhesive resin layer may be formed in a single layer or a plurality of layers. In some aspects, the adhesive resin layer may include polyolefin resin, polyurethane resin, epoxy resin, or a mixture thereof.

In some aspects, the inner resin layer 132 may be fused to the fused resin layer 122p provided on the side surface of the MTBs 120a, 120b at both ends in the second direction (for example, Y-axis direction). As the inner resin layer 132 surrounds the side surface of the MTBs 120a, 120b and is fused to the fused resin layer 122p, the stack-type electrode assembly 110 may be encapsulated in the laminate sheet 130.

The inner resin layer 132 facing the first MTB 120a may form a first sealing part 130m1 by being melted by heating and then cooled while in contact with the fused resin layer 122p on the side surface of the first MTB 120a, thereby being fused to the side surface. The inner resin layer 132 facing the second MTB 120b may form a second sealing part 130m2 by being melted by heating and then cooled while in contact with the fused resin layer 122p on the side surface of the second MTB 120b, thereby being fused to the side surface.

The ends 130t of the laminate sheet 130 surround the side surface of the MTBs 120a, 120b and the stack-type electrode assembly 110 and are fused together to form a combination part 130m (refer to FIG. 1). Specifically, the laminate sheet 130 may be pressed so that the inner resin layers 132 face each other at the combination part 130m, and then the facing inner resin layers 132 may be fused together.

The combination part 130m may be located on any one side of the stack-type electrode assembly 110. In some aspects, the combination part 130m may be located in the third direction (for example, Z-axis direction) of the stack-type electrode assembly 110 after surrounding the stack-type electrode assembly 110.

### (second aspect)

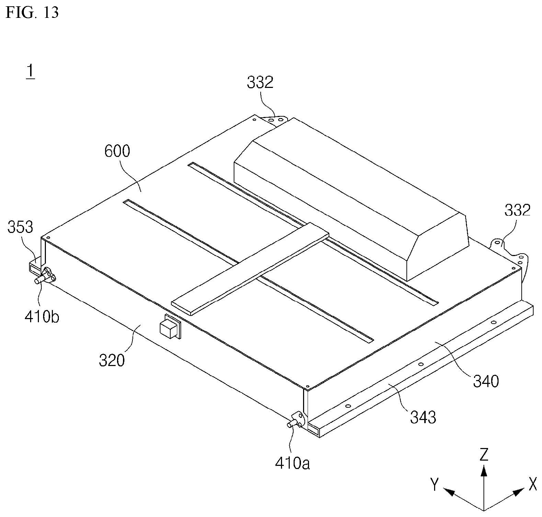

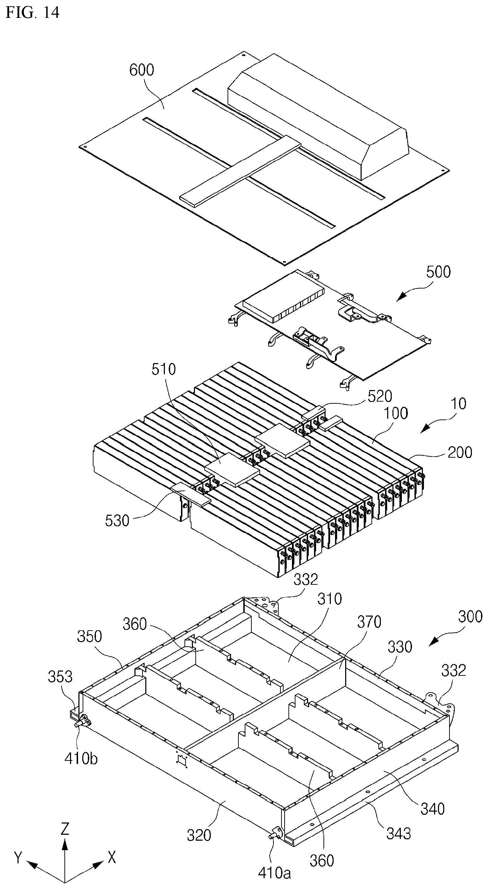

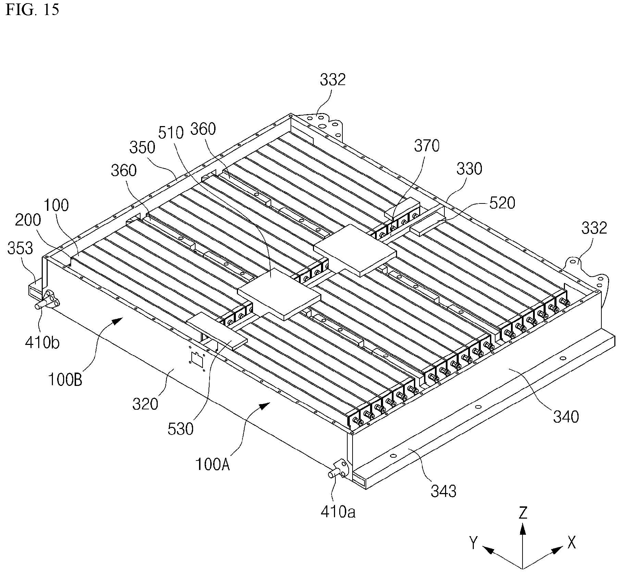

FIG. 13 is a schematic perspective view of a battery pack 1 according to one aspect of the present disclosure, FIG. 14 is an exploded perspective view schematically illustrating the configuration of the battery pack 1 of FIG. 13, and FIG. 15 is a perspective view illustrating the battery cells 100 of FIG. 14 seated in a pack housing.

Referring to FIGS. 13 to 15, the battery pack 1 according to one aspect of the present disclosure includes a plurality of battery cells 100, an electrical component assembly 500, a pack housing 300, and a pack cover 600.

The battery cells 100 are stacked in the first direction (for example, X-axis direction), and cooling pads 200 may be interposed between the battery cells. In some aspects, the stack of the battery cells 100 and the cooling pads 200 may be accommodated directly in the pack housing 300 without being accommodated in another frame. However, a person skilled in the art will understand that various modifications are possible regarding the accommodation method of these battery cells 100.

For example, the stack of the battery cells 100 and the cooling pads 200 may be accommodated in a module frame to form a battery module, and the battery modules may be accommodated in the pack housing 300. The module frame may be configured in the form of a rectangular box that surrounds the outer periphery of the stack of the battery cells 100 and the cooling pads 200 so that the stack of the battery cells 100 and the cooling pads 200 can be held inside. The module frame may be made of a metal material with high mechanical rigidity to sufficiently protect the battery cells 100 from swelling phenomena of the battery cells 100 and external impacts.

The electrical component assembly 500 may include a relay device, a current sensor, a fuse, a Battery Management System (BMS), a Manual Service Disconnector (MSD), etc. The relay device is a switching component that selectively opens and closes the charge/discharge path through which current flows, and can block the flow of charge/discharge current in case of an abnormal situation in the battery pack 1. The BMS refers to a battery management device that generally controls the charge/discharge operation of the battery cells 100, and can be said to be a component normally included in the battery pack 1. And the MSD is a system for selectively blocking the power of a high-voltage battery by a physical method, and blocks the power by separating the service plug when necessary.

This electrical component assembly 500 may be packaged so as not to be exposed to the outside by the pack housing 300 and the pack cover 600 along with the battery cells 100.

The pack housing 300 may be a structure that provides a space for accommodating the battery cells 100 and the electrical component assembly 500 inside and is equipped with brackets 332 or mounting structures 343, 353 so that it can be coupled to the vehicle body.

The pack housing 300 can be made of a high-rigidity metal material as it provides mechanical support to the battery modules 100 and the electrical component assembly 500 and protects them from external impacts, etc.

The pack housing 300 according to this aspect may include a lower frame 310 provided in the form of a wide plate-shaped body on which the battery cells 100 can be seated, a front frame 320, a rear frame 330, a right side frame 340, and a left side frame 350 that are vertically coupled along the perimeter of this lower frame 310 to form walls. Also, the pack housing 300 may further include a center beam 370 and cross beams 360 to define a space in which the battery cells 100 can be seated. One end of the center beam 370 may be coupled to the front frame 320 and the other end may be coupled to the rear frame 330. In some aspects, one end of the cross beam 360 may be coupled to the center beam 370 and the other end may be coupled to the right side frame 340 or the left side frame 350. In some aspects, the cross beam 360 may extend across the center beam 370, with one end coupled to the right side frame 340 and the other end coupled to the left side frame 350.

In some aspects, the lower frame 310, the front frame 320, the rear frame 330, the right side frame 340, the left side frame 350, and the cross beam 360 may each be aluminum extrusion structures, and the pack housing 300 may be formed by welding and/or bolt fastening these frames.

For example, by making these frames by extruding aluminum with a mixture of empty spaces and ribs inside, and by welding them to form the pack housing 300, the weight of the pack housing 300 can be reduced and the mechanical rigidity can have a reliability above the required level.

In some aspects, a heat sink may be further provided inside the pack housing 300. The heat sink may be provided in the form of a plate-shaped body having a flow path inside to absorb heat from other objects by thermal contact and to discharge it. In some aspects, the lower frame 310 may include an inlet port 410a through which coolant can flow in, an outlet port 410b through which coolant can be discharged, and a coolant channel through which coolant can flow.

The battery cells 100 may be electrically connected by inter-busbars 510, 520, 530. The inter-busbars may include a first inter-busbar 510 that electrically connects battery modules 100 arranged in a 2x2 configuration along the first direction (for example, X-axis direction) and the second direction (for example, Y-axis direction). In some aspects, the first inter-busbar 510 may be provided at the position where the center beam 370 and the cross beam 360 intersect.

Also, the inter-busbars may include a second inter-busbar 520 that electrically connects the electrically connected battery cells 100 to an external load or charging system. The second inter-busbar 520 does not need to be directly connected to the external load or charging system, and may be connected to the external load or charging system through the electrical component assembly 500.

The battery modules 100 may include a first group of battery cells 100A located on one side of the center beam 370 and a second group of battery cells 100B located on the other side. The inter-busbars may include a third inter-busbar 530 that electrically connects the first group of battery cells 100A and the second group of battery cells 100B.

### (third aspect)

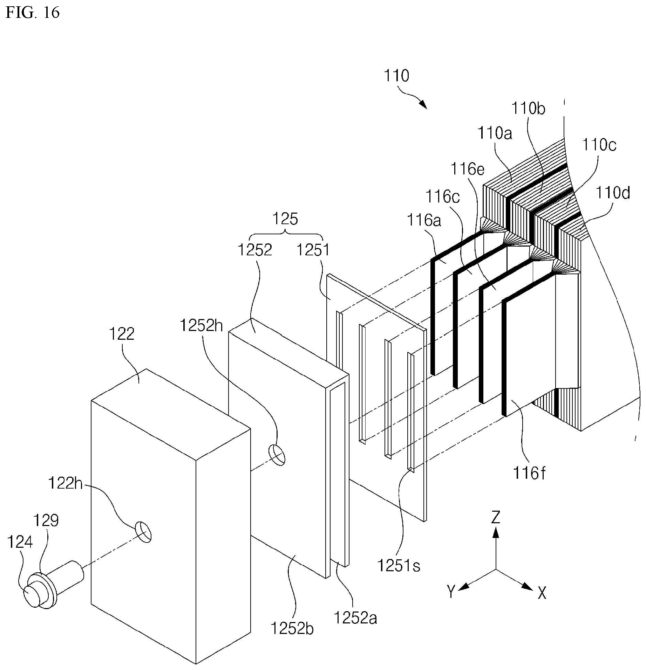

FIG. 16 is an exploded perspective view illustrating an end of a secondary battery 100 according to another aspect of the present disclosure. The secondary battery 100 of the aspect shown in FIG. 16 differs from the aspect described with reference to FIG. 4 only in that the number of electrode groups has increased. Therefore, the following description will focus on these differences, and descriptions of overlapping matters will be omitted.

Referring to FIG. 16, the busbar structure 125 may be electrically connected to the electrode tabs 116a, 116c, 116e, 116f of the stack-type electrode assembly 110. The busbar structure 125 may electrically connect the electrode tabs 116a, 116c, 116e, 116f and the electrode terminal part 124.

In some aspects, the first busbar plate 1251 may be a generally flat plate. The first busbar plate 1251 may include slits 1251s through which the electrode tabs 116a, 116c, 116e, 116f can pass. The first electrode tabs 116a may have one slit 1251s corresponding to them. The third electrode tabs 116c may have one slit 1251s corresponding to them.

The additional third electrode group 110c may have fifth electrode tabs 116e. The additional fourth electrode group 110d may have sixth electrode tabs 116f. The fifth electrode tabs 116e may have one slit 1251s corresponding to them. The sixth electrode tabs 116f may have one slit 1251s corresponding to them.

A person skilled in the art will understand that the electrode tabs located on the opposite side of the electrode tabs 116a, 116c, 116e, 116f may also have corresponding slits in a first busbar plate accommodated in the second MTB 120b.

The first electrode tabs 116a are a plurality of electrode tabs provided on one side of a plurality of unit batteries belonging to the first electrode group 110a, and they are inserted into one slit 1251s. The third electrode tabs 116c are a plurality of electrode tabs provided on one side of a plurality of unit batteries belonging to the second electrode group 110b, and they are inserted into another slit 1251s. The fifth electrode tabs 116e are a plurality of electrode tabs provided on one side of a plurality of unit batteries belonging to the third electrode group 110c, and they are inserted into one slit 1251s. The sixth electrode tabs 116f are a plurality of electrode tabs provided on one side of a plurality of unit batteries belonging to the fourth electrode group 110d, and they are inserted into another slit 1251s.

That is, electrode tabs 116a, 116c, 116e, 116f included in one electrode group 110a, 110b, 110c, 110d may be inserted into one slit 1251s.

While the first MTB 120a has been described above, a person skilled in the art will understand that the second MTB 120b located on the opposite side of the first MTB 120a may be configured in the same way from the description above.

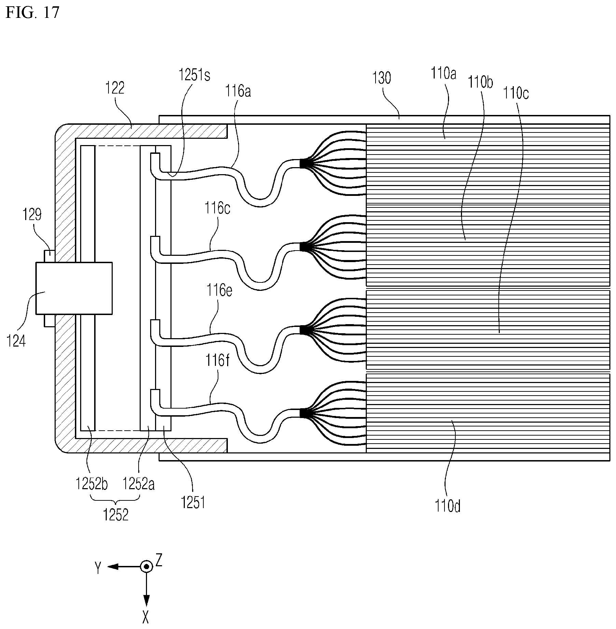

FIG. 17 is a schematic cross-sectional view illustrating the end of the secondary battery 100 shown in FIG. 16 cut through the electrode terminal part 124.

Referring to FIG. 17, a plurality of electrode tabs 116a, 116c, 116e, 116f may extend between the first busbar plate 1251 and the second busbar plate 1252. In some aspects, the plurality of electrode tabs 116a, 116c, 116e, 116f may extend along the interface between the first busbar plate 1251 and the second busbar plate 1252 after passing through the slit 1251s of the first busbar plate 1251. In some aspects, the plurality of electrode tabs 116a, 116c, 116e, 116f may extend in the first direction (for example, X-axis direction) between the first busbar plate 1251 and the second busbar plate 1252.

As shown in FIG. 5, the ends of the plurality of electrode tabs 116a, 116c, 116e, 116f have two sides extending in parallel. In some aspects, one side of the ends of the plurality of electrode tabs 116a, 116c, 116e, 116f may contact the first busbar plate 1251 and extend in the first direction (for example, X-axis direction). In some aspects, the other side of the ends of the plurality of electrode tabs 116a, 116c, 116e, 116f may contact the second busbar plate 1252 and extend in the first direction (for example, X-axis direction).

In some aspects, the plurality of electrode tabs 116a, 116c, 116e, 116f may include a shock absorbing part that is bent in a predetermined direction in the portion not inserted into the slit 1251s.

As above, although aspects of the present disclosure have been described in detail, a person of ordinary skill in the art to which the present disclosure belongs will be able to implement the present disclosure in various modifications without departing from the spirit and scope of the present disclosure as defined in the appended claims. Therefore, further modifications of aspects of the present disclosure will not depart from the technology of the present disclosure.

### [Description of Reference Numerals]

1: battery pack
100: secondary battery
110: stack-type electrode assembly
111: unit battery
116, 116a, 116b, 116c, 116d, 116e, 116f: electrode tab
120a: first MTB
120b: second MTB
122: MTB housing
122h: through-hole
122p: fused resin layer
124: electrode terminal part
125: busbar structure
128: check valve
129: insulating gasket
130: laminate sheet
200: cooling pad
300: pack housing
500: electrical component assembly
600: pack cover
1251: first busbar plate
1251s: slit
1252: second busbar plate
1252a: first part
1252b: second part

## Claims

1. A secondary battery, comprising:
an electrode assembly stack having a plurality of unit batteries stacked in a first direction and having electrode tabs of each of the plurality of unit batteries at each end in a second direction perpendicular to the first direction;
a multifunctional terminal block (MTB) provided at each end of the electrode assembly stack; and
a laminate sheet surrounding side surfaces of the electrode assembly stack,
wherein each MTB includes a busbar structure electrically connected to a plurality of the electrode tabs at the respective end and an MTB housing accommodating the busbar structure, and
wherein each busbar structure includes:
a first busbar plate through which the plurality of electrode tabs at the respective end are inserted together and a second busbar plate in surface contact with the first busbar plate.

2. The secondary battery of claim 1, wherein the first busbar plate includes two or more slits, and a portion of the plurality of electrode tabs at the respective end are inserted through each slit.

3. The secondary battery of claim 2, wherein the electrode assembly stack includes two or more electrode groups, and electrode tabs included in one electrode group are inserted through one slit.

4. The secondary battery of claim 1, wherein the second busbar plate is in surface contact with the first busbar plate with ends of the plurality of electrode tabs at the respective end positioned therebetween.

5. The secondary battery of claim 1, wherein each second busbar plate includes a first part in surface contact with the first busbar plate and a second part extending and bent from the first part.

6. The secondary battery of claim 5, wherein each second part is electrically connected to a respective electrode terminal part of the MTB.

7. The secondary battery of claim 5, wherein each second part is bent 180 degrees from the first part.

8. The secondary battery of claim 1, wherein the first busbar plate and the second busbar plate are area welded.

9. The secondary battery of claim 8, wherein the first busbar plate and the second busbar plate are bonded by electromagnetic pulse technique (EMPT).

10. A secondary battery, comprising:
an electrode assembly stack having a plurality of unit batteries stacked in a first direction and having electrode tabs of each of the plurality of unit batteries at each end in a second direction perpendicular to the first direction;
a multifunctional terminal block (MTB) provided at each end of the electrode assembly stack; and
a laminate sheet surrounding side surfaces of the electrode assembly stack,
wherein each MTB includes a busbar structure electrically connecting a plurality of the electrode tabs at a respective end and an MTB housing accommodating the busbar structure,
wherein each busbar structure includes:
a first busbar plate and a second busbar plate in surface contact with each other, and
wherein the second busbar plate includes a first part in surface contact with the first busbar plate and a second part extending and bent from the first part.

11. The secondary battery of claim 10, wherein the first part includes a plurality of slits, and a portion of plurality of electrode tabs at the respective end are inserted through each of the plurality of slits.

12. The secondary battery of claim 11, wherein the plurality of electrode tabs at the respective end extend between the first busbar plate and the second busbar plate.

13. The secondary battery of claim 12, wherein the plurality of electrode tabs are integrated with at least one of the first busbar plate and the second busbar plate between the first busbar plate and the second busbar plate such that the interface between the plurality of electrode tabs and the at least one of the first busbar plate and the second busbar plate is unidentifiable.

14. The secondary battery of claim 10, wherein the second part is bent 180 degrees from the first part.

15. The secondary battery of claim 10, wherein the first busbar plate and the first part of the second busbar plate are bonded by electromagnetic pulse technique (EMPT).
